# EUROPÄISCHE PATENTSCHRIFT

(11) **EP 0 792 393 B1**
(45) Veröffentlichungstag und Bekanntmachung des Hinweises auf die Patenterteilung: **28.01.1998**
(21) Anmeldenummer: 96929963.5
(22) Anmeldetag: 19.09.1996
(51) Int. Cl.: D01F 2/00, C08B 1/00

(54) **VERFAHREN ZUR HERSTELLUNG EINES CELLULOSISCHEN FORMKÖRPERS**
METHOD OF MANUFACTURING A CELLULOSE PRODUCT
PROCEDE DE PRODUCTION D'UN CORPS MOULE CELLULOSIQUE

(30) Priorität: 19.09.1995 AT 1557/95
(43) Veröffentlichungstag der Anmeldung: 03.09.1997
(73) Patentinhaber: LENZING AKTIENGESELLSCHAFT, 4860 Lenzing (AT)
(72) Erfinder: MÜLLEDER, Eduard, A-4030 Linz (AT); SCHREMPF, Christoph, A-4701 Band Schallerbach (AT); SCHILD, Gabriele, A-4840 Vöcklabruck (AT)
(74) Vertreter: Schwarz, Albin, Dr. Kopecky & Schwarz Patentanwälte
(86) Internationale Anmeldenummer: AT9600167
(87) Internationale Veröffentlichungsnummer: WO9711213

(56) Entgegenhaltungen:
- EP-A- 0 356 419
- WO-A-83/02278
- DD-A- 218 769
- DE-A- 2 941 624
- DE-A- 3 439 714
- LENZINGER BERICHTE, Nr. 9, September 1994, LENZING, AUSTRIA, Seiten 57-60, XP002021083 MICHELS C ET AL: "BESONDERHEITEN DES IM TITK ENTWICKELTEN AMINOXID PROZESSES"
- DAS PAPIER, Bd. 48, Nr. 3, März 1994, Seiten 107-111, XP002021084 MICHELS C ET AL: "Beitrag zur Löslichkeit von Cellulose in Aminoxiden"
- DAS PAPIER, Bd. 45, Nr. 12, Dezember 1991, Seiten 784-788, XP002021085 E TAEGER ET AL: "Untersuchungen zur Auflösung und Verformung von Cellulose in N-Methylmorpholin-N-Oxid" in der Anmeldung erwähnt
- DATABASE WPI Section Ch, Derwent Publications Ltd., London, GB; Class A11, AN 73-77379U XP002021086 & JP,B,48 041 762 (SAN-YO-KOKUSAKU PULP CO L)
- DATABASE WPI Section Ch, Week 9229 Derwent Publications Ltd., London, GB; Class A11, AN 92-240338 XP002021087 & SU,A,1 669 916 (STAVTSOV A K) , 15.August 1991

## Beschreibung

Die vorliegende Erfindung betrifft ein Verfahren zur Herstellung eines cellulosischen Formkörpers, insbesondere cellulosischer Fasern.

Als Alternative zum Viskoseverfahren wurden in den letzten Jahren eine Reihe von Verfahren beschrieben, bei denen Cellulose ohne Bildung eines Derivats in einem organischen Lösungsmittel, einer Kombination eines organischen Lösungsmittels mit einem anorganischen Salz oder in wässerigen Salzlösungen gelöst wird. Cellulosefasern, die aus solchen Lösungen hergestellt werden, erhielten von der BISFA (The International Bureau for the Standardisation of man made Fibres) den Gattungsnamen Lyocell zugeteilt. Als Lyocell wird von der BISFA eine Cellulosefaser definiert, die durch ein Spinnverfahren aus einem organischen Lösungsmittel erhalten wird. Unter "organisches Lösungsmittel" wird von der BISFA ein Gemisch aus einer organischen Chemikalie und Wasser verstanden.

Bis heute hat sich jedoch nur ein einziges Verfahren zur Herstellung einer Cellulosefaser der Gattung Lyocell bis zur industriellen Realisierung durchgesetzt, und zwar das Aminoxidverfahren. Bei diesem Verfahren wird als Lösungsmittel bevorzugt N-Methylmorpholin-N-oxid (NMMO) verwendet. Für die Zwecke der vorliegenden Beschreibung wird für den Begriff "tertiäre Aminoxide" stellvertretend die Abkürzung "NMMO" verwendet, wobei NMMO noch zusätzlich für das heute vorzugsweise verwendete N-Methylmorpholin-N-oxid steht.

Tertiäre Aminoxide sind schon seit langem als alternative Lösungsmittel für Cellulose bekannt. Aus der US-PS 2,179,181 ist beispielsweise bekannt, daß tertiäre Aminoxide hochwertigen Chemiezellstoff ohne Derivatisierung zu lösen vermögen und daß aus diesen Lösungen durch Fällung cellulosische Formkörper wie Fasern gewonnen werden können. In den US-PSen 3,447,939, 3,447,956 und 3,508,941 werden weitere Verfahren zur Herstellung cellulosischer Lösungen beschrieben, wobei als Lösungsmittel bevorzugt cyclische Aminoxide eingesetzt werden. Bei allen diesen Verfahren wird Cellulose bei erhöhter Temperatur physikalisch gelöst.

Wenn die Lösung in einem Doppelschneckenextruder oder in einem Rührgefäß bereitet wird, muß der Zellstoff jedoch einer Voraktivierung unterzogen werden, um den Löseprozeß ausreichend schnell zu vollziehen (siehe "Das Papier", Heft 12, Seiten 784-788). Als Voraktivierung werden die Bildung und Regenerierung von Alkalicellulose oder eine hydrothermische Zellstoffbehandlung vorgeschlagen.

Auch gemäß der DD-A - 226 573 wird vor der Lösungsbereitung, die ebenfalls in einem Extruder durchgeführt wird, die Cellulose voraktiviert. Die genannte DD-A geht von einer NMMO-hältigen Cellulose-Suspension aus, die zunächst in einem Rührgefäß homogenisiert wird. Anschließend wird durch Zentrifugieren oder Abpressen die Stoffdichte auf 12,5 Massen% erhöht, auf einen Wassergehalt von 10 - 15 Massen% (bezogen auf NMMO) getrocknet und in einem Extruder mit Entgasungszone bei Temperaturen zwischen 75 und 120°C in eine klare Lösung übergeführt.

In der EP-A - 0 356 419 der Anmelderin wird ein Verfahren beschrieben, das vorzugsweise in einem Dünnschichtbehandlungsapparat durchgeführt wird, in welchem eine Suspension des zerkleinerten Zellstoffs in einem wäßrigen tertiären Aminoxid in Form einer dünnen Schicht ausgebreitet über eine Heizfläche transportiert wird, wobei die Oberfläche dieser dünnen Schicht einem Vakuum ausgesetzt wird. Beim Transport der Suspension über die Heizfläche wird Wasser abgedampft und die Cellulose kann in Lösung gebracht werden, sodaß aus dem Filmtruder eine verspinnbare Celluloselösung ausgetragen wird.

Sämtliche der oben beschriebenen Verfahren verwenden als Ausgangsmaterial hochwertigen Chemiezellstoff, der z.B. aus Buchenholz oder Fichtenholz gewonnen wird. Über die Verwendung anderer cellulosehaltiger Materialien ist im Stand der Technik wenig bekannt.

Eine Verarbeitung lignocellulosischer Materialien im NMMO-Verfahren ist aus der WO 86/05526 bekannt. Für die Verarbeitung werden relativ aggressive Bedingungen empfohlen. So wird beispielsweise Pappelholz zunächst einem speziellen Hydrolyseverfahren unterzogen und das dabei erhaltene feste Produkt bei Raumtemperatur mit NMMO, das einen Wassergehalt von 13,5% aufweist, vermischt. Beim verwendeten NMMO handelt es sich um das bei Raumtemperatur in festem Zustand vorliegende Monohydrat des NMMO (Schmelzpunkt > 70°C). Die feste Mischung wird homogenisiert und auf 130°C erhitzt und aufgeschmolzen, wobei das hydrolysierte Holz in Lösung geht.

Auch in "Holzforschung", 42, Seiten 21-27 (1988) ist beschrieben, daß lignocellulosisches Material in einer Lösung von NMMO in Dimethylsulfoxid gelöst werden kann. Das eingesetzte NMMO ist keine wäßrige Lösung sondern besitzt einen Wassergehalt von 15%, was ebenfalls etwa dem Monohydrat entspricht.

Es ist wünschenswert, bei der Herstellung von Celluloselösungen weniger aggressive Bedingungen anzuwenden, bzw. einen Aufschmelzprozeß überhaupt zu vermeiden, da aus der Literatur bekannt ist, daß sowohl die Cellulose als auch NMMO bei erhöhter Temperatur einem Abbauprozeß unterliegen, und daß die Abbauprodukte die physikalischen Daten der Lyocell-Fasern, wie Festigkeit und Dehnung, verschlechtern. Ferner ist es wünschenswert, die Rohstoffbasis für das Aminoxidverfahren zur erweitern, um Zellstoffe, die in einem tertiären Aminoxid entweder schlecht gelöst werden können oder aus einer Lösung nur schlecht oder überhaupt nicht versponnen werden können, zu Fasern zu verarbeiten.

Die Erfindung stellt sich daher die Aufgabe, das Verfahren zur Herstellung cellulosischer Formkörper, insbesondere von Fasern, nach dem Aminoxidverfahren so zu verbessern, daß als Ausgangsmaterial zumindest teilweise Zellstoffmaterialien eingesetzt werden können, die in wäßrigem Aminoxid nur schlecht löslich sind, oder daß Zellstoffmaterialien eingesetzt werden können, die in wäßrigem Aminoxid zwar löslich sind, deren Lösungen aber im Stand der Technik entweder nicht oder nur schlecht verspinnbar sind.

Das erfindungsgemäße Verfahren zur Herstellung eines cellulosischen Formkörpers, insbesondere Cellulosefasern, wobei
- ein cellulosehaltiges Material in eine wässerige Lösung eines tertiären Aminoxids eingebracht wird, um das cellulosehaltige Material zu suspendieren,
- aus der Suspension unter intensivem Mischen und unter Anwendung von erhöhter Temperatur und verringertem Druck so lange Wasser abgezogen wird, bis eine Lösung von Cellulose gebildet wird, und
- die Lösung unter Verwendung eines Formwerkzeuges, insbesondere einer Spinndüse, geformt und in ein Fällbad eingebracht wird, um die gelöste Cellulose zu fällen,
ist dadurch gekennzeichnet, daß
zur Bildung der Celluloselösung eine suspension eingesetzt wird, die ein cellulosehaltiges Material enthält, das einer Elektronenstrahlung ausgesetzt wurde.

Es hat sich gezeigt, daß alternative Zellstoffquellen, wie z.B. Baumwollrandabschnitte aus Konfektionsquellen und sonstige cellulosische Abfälle, ohne chemische Aktivierungsbehandlung im Aminoxidverfahren gelöst und zu Fasern verarbeitet werden können, wenn sie vorher einer Elektronenbestrahlung ausgesetzt werden. Auch Zellstoffe, die zwar gelöst, aber deren Lösung nur bei unwirtschaftlichen Konzentrationsverhältnissen oder nur schwierig versponnen werden können, wie z.B. der Zellstoff der Type Alistaple LD 9.2, können nach der Bestrahlung zu Fasern verarbeitet werden. Die Dauer und Intensität der anzuwendenden Elektronenstrahlung, das heißt die eingestrahlte Dosis, hängt naturgemäß von der Art des eingesetzten Rohstoffes ab, kann jedoch vom Fachmann durch Vorversuche auf einfache Weise selbst herausgefunden werden.

Die Anwendung von Elektronenstrahlen zur Modifizierung des Polymerisationsgrades von Cellulosecarbamat ist zwar bekannt. Dabei wird jedoch ein Cellulosederivat, d.h. das Cellulosecarbamat, bestrahlt.

Bei einer bevorzugten Ausführungsform des erfindungsgemäßen Verfahrens wird zur Herstellung der Suspension eine wässerige Lösung des tertiären Aminoxids eingesetzt, die zwischen 60 und 80 Massen% Aminoxid enthält.

Eine weitere bevorzugte Ausführungsform des erfindungsgemäßen Verfahrens ist dadurch gekennzeichnet, daß als cellulosisches Material zusätzlich unbestrahltes cellulosisches Material eingesetzt wird.

Es hat sich gezeigt, daß auch Mischungen eines bestrahlten und eines unbestrahlten cellulosischen Materials im Verfahren hervorragend eingesetzt werden können. Dem bestrahlten cellulosischen Material kann einerseits zur weiteren Verbesserung der Verarbeitbarkeit ein bereits im unbestrahlten Zustand gut zur Auflösung und Verspinnung geeigneter, zumeist eher niedermolekularer Zellstoff zugegeben werden. Andererseits können durch die Bestrahlung dem bestrahlten Zellstoff so hervorragende Eigenschaften verliehen werden, daß er, ohne wesentliche Verluste in der Verarbeitung in Kauf nehmen zu müssen, auch mit weniger gut für das Aminoxidverfahren geeigneten Materialien, z.B. hochmolekularem Zellstoff oder den erwähnten Textilien, gemischt werden kann.

Es hat sich ferner gezeigt, daß sich die Suspension aus dem bestrahlten Zellstoff oder dem bestrahlten cellulosehaltigen Material am besten nach der Dünnschichttechnik in eine spinnbare Lösung überführen läßt. Eine weitere bevorzugte Ausführungsform des erfindungsgemäßen Verfahrens ist daher dadurch gekennzeichnet, daß die Lösung gebildet wird, indem
- die Suspension kontinuierlich in ein evakuierbares, beheizbares Gefäß eingebracht wird,
- die eingebrachte Suspension zur Bildung von zwei Oberflächen schicht- bzw. filmartig mechanisch ausgebreitet wird,
- die ausgebreitete Suspension zur Wärmezufuhr über eine oberfläche mit einer Heizfläche in Kontakt gebracht wird,
- die ausgebreitete Suspension unter intensivem Mischen über die Heizfläche transportiert wird,
- während des Transportes über die Heizfläche die dieser Heizfläche abgewandte, zweite Oberfläche einem verminderten Druck ausgesetzt wird, um Wasser zu verdampfen, bis das cellulosehaltige Material in Lösung gegangen ist, und
- die Lösung aus dem Gefäß kontinuierlich abgezogen wird.

Eine zweckmäßige Einrichtung, in welcher diese Ausführungsform des erfindungsgemäßen Verfahren durchgeführt werden kann, ist ein Dünnschichtbehandlungsapparat, wie ihn z.B. die Firma Buss (Schweiz) als Filmtruder herstellt. Es hat sich gezeigt, daß sich ein derartiger Dünnschichtbehandlungsapparat ganz besonders gut eignet, diese Zellstoffe und diese cellulosehaltigen Materialien zu lösen. Es wird angenommen, daß dies auf die hohen Scherkräfte zurückzuführen ist, die im Dünnschichtbehandlungsapparat auftreten.

Mit den nachfolgenden Beispielen wird die Erfindung näher beschrieben, wobei der Einfluß der Bestrahlung von Zellstoffen auf ihre Molekulargewichtsverteilung (Beispiel 1), auf ihr Auflösungsverhalten in einem wäßrigen tertiären Aminoxid (Beispiel 2) und auf die spinnbarkeit der Celluloselösungen (Beispiel 3) dokumentiert wird.

### Beispiel 1

Zuerst wurde mittels Gelpermeationschromatographie (GPC) das Molekulargewichtsprofil (dN/N [%] gegen log MG Pseudopolystyrol) des Zellstoffs Viscokraft LV (Hersteller: International Paper), eines Zellstoffs, der im Aminoxidverfahren aufgrund seines Löslichkeitsverhaltens gut eingesetzt werden kann, aufgenommen. Die Größe dN/N (%) beschreibt dabei den prozentuellen Häufigkeitsanteil der Molmassenfraktion.

Vor Durchführung der GPC wurde eine HPLC-Säule über Polystyrolpolymere kalibriert. Die detektierten Massen beziehen sich daher auf Polystyrolpolymere.

Zur Aufnahme der GPC wurde der Zellstoff in LiCl/DMAc gelöst und über die HPLC-Säule mit definierten Ausschlußvolumina chromatographiert. Detektiert wurde über einen Brechungsindexdetektor.

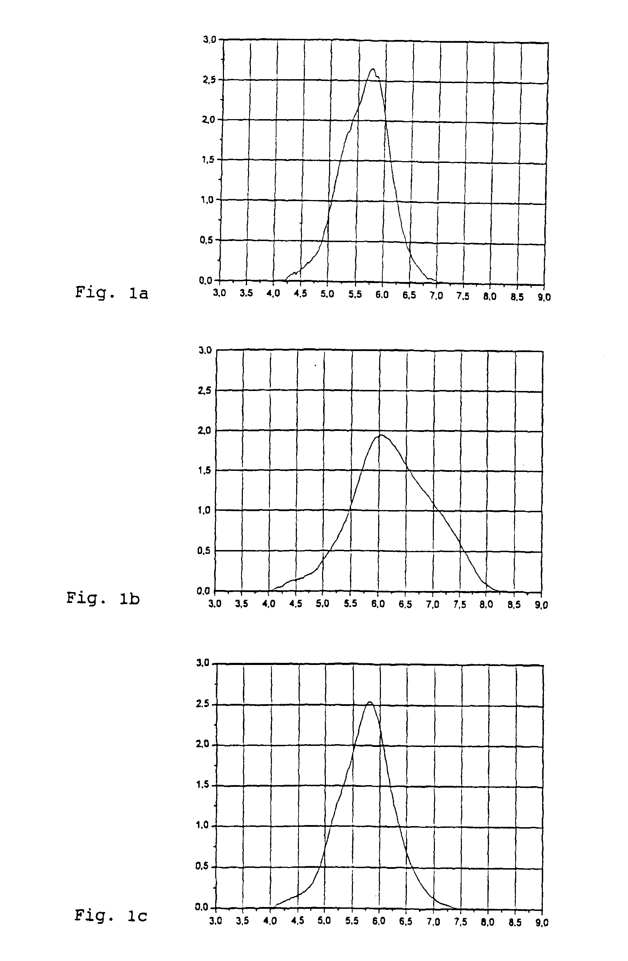

Das Ergebnis ist in der Figur 1a (in allen Figuren: Abszisse: log MG Pseudopolystyrol; Ordinate: dN/N [%]) dargestellt und zeigt eine relativ enge Verteilung mit einem Maximum des Logarithmus des Molekulargewichts (log MG Pseudopolystyrol) von etwa 5,75.

Als Vergleich dazu wurde das Molekulargewichtsprofil eines weiteren Zellstoffs aufgenommen, der sich praktisch nicht zur Verwendung im Aminoxidverfahren eignet (Alistaple LD 9.2; Hersteller: Western Pulp). Das Ergebnis ist in der Figur 1b dargestellt und zeigt, daß die Verteilung nicht nur viel breiter ist, als beim Zellstoff Viscokraft LV, sondern auch, daß das Maximum höher liegt, und zwar bei einem log MG Pseudopolystyrol von etwa 6,0.

Um den günstigen Einfluß der Bestrahlung auf das Molekulargewichtsprofil zu zeigen, wurde der gleiche Zellstoff Alistaple LD 9.2 in einer 500 kV Elektronenbeschleunigungsapparatur mit einer Strahlungsdosis von 20 kGy bestrahlt (Inertgas: Gemisch aus CO₂ und N₂; Temperatur: 25°C) und vom bestrahlten Zellstoff das Molekulargewichtsprofil aufgenommen. Das Ergebnis ist in der Figur 1c dargestellt. Der Einfluß der Bestrahlung ist klar ersichtlich: die Verteilungskurve ist viel enger und ähnelt stark jener des Zellstoffs Viscokraft LV. Auch das Maximum wurde in Richtung eines niedrigeren Molekulargewichtes verschoben und liegt nun bei etwa 5,75, also ebenfalls im Bereich von Viscokraft LV.

Mit diesen Ergebnissen wird dokumentiert, daß mittels Elektronenbestrahlung aus einem Zellstoff, der im Aminoxidverfahren nur schlecht oder überhaupt nicht eingesetzt werden kann, ein Zellstoff erhalten wird, dessen Molekulargewichtsverteilung der eines im Aminoxidverfahren gut einsetzbaren Zellstoffs stark ähnelt.

### Beispiel 2

Um das Auflösungsverhalten zu untersuchen, wurde zunächst zerkleinerter Zellstoff Viscokraft LV (durchschnittlicher Polymerisationsgrad: 450) in wäßrigem, 50%igem NMMO suspendiert, in einen Kneter (Type: IKA-Laborkneter HKD-T; Hersteller: IKA-Labortechnik) gegeben und eine Stunde imprägnieren gelassen. Anschließend wurde durch Beheizung des Kneters mit einem auf 130°C temperierten Heizmedium und durch in definierten zeitlichen Schritten durchgeführte Verringerung des Unterdrucks Wasser abgedampft, bis der Zellstoff vollständig in Lösung gegangen war. Bei Erreichen eines Unterdruckes von 125 mbar wurde in gewissen Zeitabständen (3 x 5 Minuten, 4 Minuten, dann je 2 Minuten, bis zur vollständigen Auflösung) eine Probe dem Kneter entnommen und mikroskopisch (Vergrößerung: 100 x) untersucht.

Zur Bewertung der Probe wurden folgende Auflösungsnoten vergeben:
Note 5: viele Faserteile sind zu sehen;
Note 4: viele ungelöste Partikel und lange Kristallite sind zu sehen;
Note 3: etwas kürzere Kristallite sind zu sehen;
Note 2: wenige Kristallite sind zu sehen;
Note 1: es sind praktisch keine ungelösten Partikel zu sehen.

Die Ergebnisse sind unten in der Tabelle 1 angegeben. Ihr ist zu entnehmen, daß sich Viscokraft LV nach etwa 10 Minuten zu lösen beginnt, wobei der Auflösungsvorgang in der Folge ziemlich gleichmäßig verläuft und nach etwa 23 Minuten abgeschlossen ist. Die Temperatur beträgt zu diesem Zeitpunkt 99,0°C.

Der obige Versuch wurde zum Vergleich unter sonst gleichen Bedingungen mit dem Zellstoff Alistaple LD 9.2 (durchschnittlicher Polymerisationsgrad: 1978) wiederholt. Die Ergebnisse sind ebenfalls in der Tabelle 1 angegeben und zeigen, daß sich dieser Zellstoff erst nach 29 Minuten und bei einer höheren Temperatur (104,7°C) auflöst. Dies zeigt deutlich, daß sich dieser Zellstoff schlechter löst.

Um den Einfluß der Bestrahlung zu zeigen, wurde der Versuch mit bestrahltem (20 kGy) Alistaple LD 9.2 (durchschnittlicher Polymerisationsgrad nach Bestrahlung: 414) wiederholt. Auch diese Ergebnisse sind in der Tabelle 1 angegeben. Sie zeigen, daß sich der bestrahlte Zellstoff bereits nach 19 Minuten und bei einer Temperatur von nur 95,4°C auflöst. Der Entwicklung der Auflösenoten kann entnommen werden, daß sich der bestrahlte Zellstoff nach einer 15minütigen Vorbereitungszeit offenbar sprunghaft auflöst.

**Tabelle 1**

| Zellstoff | Zeit (min) | Lösenote | Temperatur (°C) | Druck (mbar) |
|---|---|---|---|---|
| Viscokraft | | | | |
| " | 0 | 5 | 88,2 | 125 |
| " | 5 | 5 | 89,8 | 100 |
| " | 10 | 5 | 91,3 | 75 |
| " | 15 | 1,5 | 93,8 | 50 |
| " | 19 | 1,5 | 96,1 | 50 |
| " | 21 | 1,2 | 97,6 | 50 |
| " | 23 | 1 | 99,0 | 50 |
| | | | | |

| Alistaple (unbestrahlt) | | | | |
|---|---|---|---|---|
| " | 0 | 5 | 86,3 | 125 |
| " | 5 | 5 | 87,0 | 100 |
| " | 10 | 5 | 87,6 | 75 |
| " | 15 | 5 | 93,0 | 50 |
| " | 19 | 3,5 | 96,0 | 50 |
| " | 21 | 3 | 98,3 | 50 |
| " | 23 | 2,5 | 99,6 | 50 |
| " | 25 | 2 | 101,1 | 50 |
| " | 27 | 1,2 | 103,0 | 50 |
| " | 29 | 1 | 104,7 | 50 |
| | | | | |

| Alistaple (bestrahlt) | | | | |
|---|---|---|---|---|
| " | 0 | 5 | 87,4 | 125 |
| " | 5 | 5 | 88,9 | 100 |
| " | 10 | 5 | 91,5 | 75 |
| " | 15 | 2 | 93,9 | 50 |
| " | 19 | 1 | 95,4 | 50 |

Bemerkenswert erscheint auch, daß der bestrahlte Zellstoff Alistaple LD 9.2 schneller und schonender gelöst werden kann als Viscokraft LV, obwohl beide Zellstoffe praktisch den gleichen durchschnittlichen Polymerisationsgrad aufweisen.

### Beipiel 3

Um den Einfluß der Zellstoffbestrahlung auf das Spinnverhalten zu untersuchen, wurden zunächst aus Buchenholz-Sulfitzellstoff, der mit Ozon gebleicht war (BKZO3; Hersteller: Lenzing AG), Lösungen mit 15% Cellulose hergestellt.

Als Spinnapparat wurde ein in der Kunststoffverarbeitung gebräuchliches Schmelzindexgerät der Firma Davenport verwendet. Dieses Gerät besteht aus einem beheizten, temperaturregelbaren Zylinder, in den die Spinnmasse eingefüllt wird. Mittels eines Kolbens, der mit einem Gewicht belastet wird, wird die spinnmasse durch die an der Unterseite des Zylinders angebrachte Spinndüse extrudiert. Für die Versuche wurde die in den Spinnapparat eingebrachte Spinnmasse bei verschiedenen Temperaturen (zwischen 90°C und 120°C) durch eine Düse mit einem Durchmesser von 100 µm extrudiert, durch einen Luftspalt (3 cm) mit trockener Luft in ein wäßriges Fällbad geführt, umgelenkt und über eine Galette abgezogen, die hinter dem Fällbad vorgesehen war. Der Spinnmasseausstoß durch die Düse betrug 0,030 g/min.

Das Spinnverhalten wurde untersucht, indem die maximale Abzugsgeschwindigkeit (m/min) ermittelt wurde. Diese maximale Abzugsgeschwindigkeit ist jene Geschwindigkeit bei einer vorgegebenen Temperatur, bei der der abgezogene Spinnfaden reißt. Sie ist damit ein Maß für das Spinnverhalten. Je höher dieser Wert ist, desto besser ist das Spinnverhalten.

Anschließend wurden der Versuch mit dem gleichen Zellstoff unter identischen Bedingungen wiederholt, außer daß der eingesetzte Zellstoff einmal mit 10 kGy und ein weiteres Mal mit 20 kGy bestrahlt war. Die Ergebnisse sind in der Tabelle 2a angegeben.

**Tabelle 2a**

| Zellstoff BKZO3 | Temperatur (°C) | max. Abzugsgeschw. (m/min) |
|---|---|---|
| (unbestrahlt) | 120 | 72 |
| " | 115 | 59 |
| " | 110 | 67 |
| " | 105 | 57 |
| " | 100 | 49 |
| " | 95 | 52 |
| (10 kGy) | 120 | 189 |
| " | 115 | 171 |
| " | 110 | 172 |
| " | 105 | 134 |
| " | 100 | 144 |
| " | 95 | 122 |
| " | 90 | 117 |
| (20 kGy) | 110 | 197 |
| " | 105 | 161 |
| " | 100 | 199 |
| " | 95 | 184 |
| " | 90 | 177 |

Der Tabelle 2a kann entnommen werden, daß sich die Spinnbarkeit des Zellstoffes mit Bestrahlung verbessern läßt.

Zum Vergleich wurden die obigen Versuche mit dem Zellstoff Alistaple LD 9.2 wiederholt, wobei sich jedoch zeigte, daß die aus einer 15%igen Lösung aus unbestrahltem Alistaple LD 9.2 extrudierten Fäden sofort, also bereits bei sehr geringer Abzugsgeschwindigkeit, rissen. Solche Lösungen werden als nicht verspinnbar bezeichnet. Die Ergebnisse mit bestrahltem (10 kGy und 20 kGy) Alistaple LD 9.2 sind in der nachfolgenden Tabelle 2b angegeben.

**Tabelle 2b**

| Zellstoff Alistaple | Temperatur (°C) | max. Abzugsgeschw. (m/min) |
|---|---|---|
| (10 kGy) | 120 | 155 |
| " | 115 | 169 |
| " | 110 | 175 |
| " | 105 | 182 |
| " | 100 | 172 |
| " | 95 | 144 |
| " | 90 | 150 |
| (20 kGy) | 120 | 199,7 |
| " | 115 | 195 |
| " | 110 | 187 |
| " | 105 | 193 |
| " | 100 | 185 |
| " | 95 | 178,3 |
| " | 90 | 184,3 |

Es hat sich ferner gezeigt, daß sich die textilen Daten von Fasern, die aus bestrahlten Zellstoffen hergestellt werden, nicht wesentlich von jenen unterscheiden, die von Fasern aus unbestrahlten Zellstoffen bekannt sind, und daß Zellstoffe, wie z.B. Alistaple LD 9.2, deren Lösungen als nicht verspinnbar gelten, durch Elektronenbestrahlung derart modifiziert werden, daß sie im Aminoxidverfahren eingesetzt werden können.

## Patentansprüche

1. Verfahren zur Herstellung eines cellulosischen Formkörpers, insbesondere Cellulosefasern, wobei
- ein cellulosehaltiges Material in eine wässerige Lösung eines tertiären Aminoxids eingebracht wird, um das cellulosehaltige Material zu suspendieren,
- aus der Suspension unter intensivem Mischen und unter Anwendung von erhöhter Temperatur und verringertem Druck so lange Wasser abgezogen wird, bis eine Lösung von Cellulose gebildet wird, und
- die Lösung unter Verwendung eines Formwerkzeuges, insbesondere einer Spinndüse, geformt und in ein Fällbad eingebracht wird, um die gelöste Cellulose zu fällen,
dadurch gekennzeichnet, daß
zur Bildung der Celluloselösung eine Suspension eingesetzt wird, die ein cellulosehaltiges Material enthält, das einer Elektronenstrahlung ausgesetzt wurde.

2. Verfahren nach Anspruch 1, dadurch gekennzeichnet, daß die zur Herstellung der Suspension eingesetzte wässerige Lösung das tertiäre Aminoxid zwischen 60 und 80 Massen% enthält.

3. Verfahren nach Anspruch 1, dadurch gekennzeichnet, daß als cellulosisches Material zusätzlich unbestrahltes cellulosisches Material eingesetzt wird.

4. Verfahren nach einem der Ansprüche 1 bis 3, dadurch gekennzeichnet, daß als tertiäres Aminoxid N-Methyl-morpholin--N-oxid eingesetzt wird.

5. Verfahren nach einem der Ansprüche 1 bis 4, dadurch gekennzeichnet, daß die Lösung gebildet wird, indem
- die Suspension kontinuierlich in ein evakuierbares, beheizbares Gefäß eingebracht wird,
- die eingebrachte Suspension zur Bildung von zwei Oberflächen schicht- bzw. filmartig mechanisch ausgebreitet wird,
- die ausgebreitete Suspension zur Wärmezufuhr über eine Oberfläche mit einer Heizfläche in Kontakt gebracht wird,
- die ausgebreitete Suspension unter intensivem Mischen über die Heizfläche transportiert wird,
- während des Transportes über die Heizfläche die dieser Heizfläche abgewandte, zweite Oberfläche einem verminderten Druck ausgesetzt wird, um Wasser zu verdampfen, bis das cellulosehaltige Material in Lösung gegangen ist, und
- die Lösung aus dem Gefäß kontinuierlich abgezogen wird.

## Claims

1. Process for producing a cellulosic moulded body, in particular cellulose fibres, in which
- a cellulose-containing material is introduced into an aqueous solution of a tertiary amine oxide in order to suspend the cellulose-containing material,
- water is distilled off the suspension while mixing vigorously and applying elevated temperature and reduced pressure until a solution of cellulose is formed, and
- the solution is moulded using a moulding tool, in particular a spinneret, and is introduced into a precipitation bath in order to precipitate the dissolved cellulose,
characterized in that, to form the cellulose solution, a suspension is used which contains a cellulose-containing material which was exposed to electron radiation.

2. Process according to Claim 1, characterized in that the aqueous solution used to prepare the suspension contains between 60 and 80% by mass of the tertiary amine oxide.

3. Process according to Claim 1, characterized in that unirradiated cellulosic material is additionally used as cellulosic material.

4. Process according to one of Claims 1 to 3, characterized in that N-methylmorpholine N-oxide is used as tertiary amine oxide.

5. Process according to one of Claims 1 to 4, characterized in that the solution is formed by
- introducing the suspension continuously into an evacuable heated vessel,
- spreading out the suspension introduced mechanically in layer form or film form to form two surfaces,
- bringing the suspension spread out into contact with a heating surface over one surface for the purpose of supplying heat,
- conveying the suspension spread out over the heating surface while vigorously mixing,
- exposing the second surface remote from the heating surface to a reduced pressure during conveyance over the heating surface in order to evaporate water until the cellulose-containing material has gone into solution, and
- continuously drawing off the solution from the vessel.

## Revendications

1. Procédé de fabrication d'un article moulé cellulosique, en particulier, des fibres de cellulose, conformément auquel
- on introduit une matière contenant de la cellulose dans une solution aqueuse d'un oxyde d'amine tertiaire, afin d'y mettre la matière contenant de la cellulose en suspension,
- on élimine de l'eau de la suspension, sous mélange intensif et sous utilisation d'une température élevée et d'une pression réduite, pendant la durée nécessaire à la formation d'une solution de cellulose et
- on moule la solution en recourant à l'emploi d'un outil de moulage, plus particulièrement, une filière et on l'introduit dans un bain de précipitation, afin de précipiter la cellulose dissoute,
caractérisé en ce que
en vue de la formation de la solution de cellulose, on utilise une suspension qui contient une matière contenant de la cellulose, qui a été exposée à un rayonnement d'électrons.

2. Procédé suivant la revendication 1, caractérisé en ce que la solution aqueuse utilisée pour la préparation de la solution contient entre 60 et 80% massiques de l'oxyde d'amine tertiaire.

3. Procédé suivant la revendication 1, caractérisé en ce que, à titre de matière cellulosique, on utilise complémentairement de la matière cellulosique non irradiée.

4. Procédé suivant l'une quelconque des revendications 1 à 3, caractérisé en ce que l'on utilise le N-méthylmorpholine-N-oxyde, à titre d'oxyde d'amine tertiaire.

5. Procédé suivant l'une quelconque des revendications 1 à 4, caractérisé en ce que l'on forme la solution en
- introduisant la suspension en continu dans un récipient chauffable dans lequel on peut faire le vide,
- étendant mécaniquement la solution introduite en forme de couche ou de film, en vue de la formation de deux surfaces,
- mettant en contact la suspension étendue avec une surface chaude, en vue de l'apport de chaleur au dessus d'une surface,
- transportant la suspension étendue sous mélange intensif sur la surface chaude,
- exposant la seconde surface opposée à cette surface chaude à une pression réduite au cours du transport sur la surface chaude, en vue d'évaporer l'eau, jusqu'à ce que la matière contenant de la cellulose soit entrée en solution et
- prélevant en continu la solution hors du récipient.
